# FASCICULE DE BREVET EUROPEEN

(11) **EP 1 041 893 B1**
(45) Date de publication et mention de la délivrance du brevet: **09.10.2002**
(21) Numéro de dépôt: 98966925.4
(22) Date de dépôt: 24.12.1998
(51) Int. Cl.: A23C 19/068, A23C 19/032

(54) **FABRICATION D'UN FROMAGE DE TYPE MOZZARELLA**
HERSTELLUNG VON MOZZARELLA KÄSE
METHOD FOR MAKING MOZZARELLA-TYPE CHEESE

(30) Priorité: 29.12.1997 EP 97204135
(43) Date de publication de la demande: 11.10.2000
(73) Titulaire: SOCIETE DES PRODUITS NESTLE S.A., 1800 Vevey (CH)
(72) Inventeur: PARMANTIER, Claude, F-14100 Glos (FR); BISSON, Jean-Pierre, F-14000 Caen (FR); D'AMICO, Nicola, CH-1436 Treycovagnes (CH); RENIERO, Roberto, CH-1801 Le Mont-Pèlerin (CH)
(74) Mandataire: Archambault, Jean
(86) Numéro de dépôt international: EP9808567
(87) Numéro de publication internationale: WO99033350

(56) Documents cités:
- FR-A- 2 085 451
- US-A- 4 226 888
- US-A- 5 431 931
- E. PARENTE: "A multiple strain starter for water-buffalo Mozzarella cheese manufacture" LAIT, vol. 69, no. 4, 1989, pages 271-279, XP002066754
- DATABASE FSTA INTERNATIONAL FOOD INFORMATION SERVICE (IFIS), FRANFURT/MAIN, DE AN=75-3-11-p2475, POZNANSKI S ET AL: "Manufacturing procedure and use of special Swietokrzyski cheese." XP002066756 & PRZEMYSL SPOZYWCZY, vol. 29, no. 4, 1975, pages 171-173, INST. INZYNIERII I BIOTECH. ZYWNOSCI, ART, OLSZTYN, POLAND
- DATABASE FSTA INTERNATIONAL FOOD INFORMATION SERVICE (IFIS), FRANFURT/MAIN, DE AN=91-1-12-p0064, J. STAHO: "New trends in and experience of the manufacture of Mozzarella -type steamed cheeses using Alpma continuous equipment" XP002066757 & "Zbornik referatov zo IV. konferencie o novej technologii a technike vyroby syrov Syrotech' 90" 1990 , MILEX S.P. , NOVE ZAMKY
- ANON.: "Herstellung von Pasta Filata mit dem Koagulator" DEUTSCHE MILCHWIRTSCHAFT, vol. 43, no. 11, 1992, page 351 XP002066755
- MAGGI A: "NEUE PRODUKTE FUR DEUTSCHE KASEREIEN: MOZZARELLA" DEUTSCHE MOLKEREI ZEITUNG DMZ, MUNCHEN, DE, vol. 110, no. 4, 26 janvier 1989, pages 113-116, XP000002953

## Description

La présente invention a pour objet un procédé de préparation d'un fromage de type mozzarella.

Traditionnellement, il est connu de préparer le fromage de type mozzarella à partir d'un lait cru que l'on fermente avec un starter naturel dont les souches bactériennes ne sont pas caractérisées. Par ajout de présure, ce lait cru fermenté est alors coagulé sous forme d'un caillé qui est découpé, brassé puis égoutté, de manière à en séparer le sérum. Le caillé est égoutté et acidifié en moule, en présence de bactéries thermophiles, pendant 2 à 6h. Ce caillé est ensuite découpé en morceaux et trempé dans de l'eau à 90° C, pour être filé et ainsi obtenir un fromage de type mozzarella.

La procédé traditionnel artisanal de préparation d'un fromage de type mozzarella est long et présente des manipulations successives qui sont difficiles à gérer industriellement.

Par ailleurs, la demande de brevet FR 2555 865 décrit un procédé de préparation d'une pâte à l'arôme de fromage pouvant être utilisée pour l'aromatisation de compositions alimentaires, par exemple, des fromages fondus. Au cours de ce procédé, un concentré de lait, ayant une teneur en extrait sec de 30%, est soumis à une première étape de fermentation par des souches bactériennes thermophiles, suivie d'une seconde étape de fermentation par des souches bactériennes mésophiles et/ou cryophiles. La pâte à l'arôme fromage ainsi obtenue est ensuite pasteurisée et ajoutée à une composition alimentaire, de manière à renforcer le caractère aromatique.

Le procédé décrit dans la demande de brevet FR 2555 865 permet de palier au manque de note aromatique pouvant être rencontrée dans la fabrication industrielle de certaines compositions alimentaires, en ajoutant à celles-ci une pâte à l'arôme fromage, obtenue par fermentation d'un lait concentré par des souches bactériennes thermophiles et des souches bactériennes mésophiles traditionnellement utilisées par les fromagers.

Bien que permettant une amélioration de l'aromatisation de compositions alimentaires, ce document ne propose pas un procédé industriel simple et rapide de fabrication de fromages et, plus particulièrement, de fromages de type mozzarella.

Le brevet US 4 226 888 (C.SIECKER) décrit la préparation de fromages du type pasta filata par fermentation du lait avec des souches bactériennes thermophiles et mésophiles, suivie des étapes de coagulation, séparation de sérum, traitement de cheddar et filature-formage.

Dans le domaine de l'industrie fromagère, aucun procédé simple et rapide permettant de réaliser des fromages de type mozzarella présentant le goût, la texture, l'onctuosité et la consistance régulière d'un fromage de type mozzarella réalisé de manière artisanale n'est connu.

Par ailleurs, on observe des variabilités de la qualité, notamment au niveau de la texture, du goût et de la conservation des fromages de type mozzarella, lors de la fabrication industrielle. Ces variabilités ont été identifiées comme étant liées à des problèmes de décalcification lors des étapes d'égouttage et d'acidification en moule.

Le but de la présente invention est de proposer un procédé simple, rapide et applicable industriellement permettant de palier à ces problèmes et permettant de réaliser des fromages de type mozzarella ayant les mêmes caractéristiques que ces fromages réalisés artisanalement, à savoir une texture typique de la mozzarella et un goût fermier authentique.

A cet effet, dans le procédé selon la présente invention, on fermente au moins une fraction de lait avec au moins une souche bactérienne thermophile et au moins une fraction de lait avec au moins une souche bactérienne mésophile, on ajoute une portion de chacune de ces fractions à du lait, en quantité suffisante, de manière à atteindre le pH de filature et à le maintenir jusqu'à l'étape de filature-formage, on coagule le lait aromatisé, ainsi réalisé, par ajout de présure, de manière à obtenir un coagulum, on découpe ce coagulum en morceaux que l'on brasse en cuve, on sépare instantanément, en continu, le sérum du grain de caillé ainsi réalisé, de manière à obtenir une masse de fromage de type mozzarella que l'on file et que l'on forme ensuite en unités.

Contre toute attente, on a constaté que le procédé simple et rapide selon l'invention permet de réaliser un fromage de type mozzarella, bien que ne présentant pas une étape d'égouttage et d'acidification en moule de 2 à 6h, normalement nécessaire pour la texturation dans le procédé traditionnel.
La supression de l'étape d'égouttage et d'acidification classique, dans le procédé selon l'invention, permet un gain de temps et gain de coût considérables.
Par ailleurs, on a constaté avec surprise que ce procédé permet de réaliser industriellement du fromage de type mozzarella présentant les qualités organoleptiques et gustatives comparables à celles d'un fromage de type mozzarella réalisé de manière traditionnelle et artisanale.

Par lait, on entend désigner, un lait d'origine animale, tel que les laits de vache, de chèvre, de brebis, de bufflesse, de zébue, de jument, d'ânesse, de chamelle, etc. Ce lait peut être un lait à l'état natif, un lait reconstitué, un lait écrémé, ou un lait additionné de composés nécessaires à la croissance des bactéries, au traitement du lait, ou aux qualités finales du fromage frais, comme des matières grasses, de l'extrait de levure, de la peptone et/ou un surfactant, par exemple.

Ce lait doit être pasteurisé, c'est à dire doit avoir un subi un traitement de pasteurisation classique. Ces techniques sont bien connues de l'homme du métier.

Dans la suite de la description, on emploiera l'expression "on forme des unité" pour désigner une étape de formage de la masse de fromage de type mozzarella dans des volumes désirés, par entraînement de cette masse plastique dans des formes. De préférence on forme des unités de 5-400 g.

De préférence, dans le procédé selon l'invention, on fermente pendant 3-24 h à 20-45° C et à un pH de 4,0-5,5 au moins une fraction de lait avec 0,1-10% d'au moins une souche bactérienne thermophile et au moins une fraction de lait avec 0,1-10% d'au moins une souche bactérienne mésophile.

La ou les fractions de lait fermentées avec au moins une souche bactérienne mésophile permettent le développement de la note aromatique spécifique d'un fromage de type mozzarella.

La ou les fractions de lait fermentées avec au moins une souche bactérienne thermophile permettent le développement d'une faible note aromatique et surtout une acidification nécessaire à la formation de la texture et du goût spécifiques d'un fromage de type mozzarella.

On peut notamment utiliser comme souches bactériennes thermophiles des *Streptococcus thermophilus,* des *Lactobacillus delbruekii* subsp *bulgaricus,* des *Lactobacillus johnsonii* et/ou des *Lactobacillus helveticus* et comme souche bactériennes mésophiles des *Lactococcus* *lactis* subsp *lactis* biovar *diacétylactis,* des *Leuconostoc mesenteroïdes* subsp *mesenteroïdes,* des *Leuconostoc lactis* et/ou des *Enterococcus faecium.*

On peut notamment utiliser comme souches bactériennes thermophiles, la souche de *Streptococcus thermophilus* CNCM I-1383, déposée le 8 décembre 1993, ou la souche de *Streptococcus thermophilus* CNCM I-141, déposée le 18 mai 1994, selon le traité de Budapest, à la Collection National de Cultures de Microorganismes, INSTITUT PASTEUR, 25 Rue du Docteur Roux, F-75724 PARIS CEDEX 15, France.

On peut notamment utiliser comme somme souches bactériennes mésophiles celles déposées le 19 décembre 1997, selon le Traité de Budapest, à la Collection National de Cultures de Microorganismes, INSTITUT PASTEUR, 25 Rue du Docteur Roux, F-75724 PARIS CEDEX 15, France. Ces souches bactériennes mésophiles sont la souche de *Leuconostoc mesenteroïdes* subsp *mesenteroïdes* CNCM I-1956, la souche de *Leuconostoc mesenteroïdes* subsp *mesenteroïdes* CNCM I-1957, 1a souche de *Leuconostoc* lactis CNCM I-1958, la souche d'*Enterococcus faecium* CNCM I-1959, la souche de *Lactococcus lactis* subsp *lactis* biovar *diacétylactis* CNCM I-1960, la souche de *Lactococcus* lactis subsp *lactis* biovar *diacétylactis* CNCM I-1961 et/ou la souche de *Lactococcus lactis* subsp *lactis* biovar *diacétylactis* CNCM I-1962 et font l'objet de la présente demande.

De préférence, on fermente pendant 9-12 h à 28-32° C à un pH de 4-4,6 la ou les fractions de lait par au moins une souche bactérienne mésophile.

De préférence, on fermente pendant 4-7 h à 36-40° C à un pH de 4,1-4,5 la ou les fractions de lait par au moins une souche bactérienne thermophile.

On ajoute ensuite une portion de chacune de ces fractions à du lait en quantité suffisante, de manière à atteindre le pH de filature et le maintenir jusqu'à l'étape de filature-formage.

De préférence, ce pH de filature a une valeur de 5,2-5,7.

Pour ce faire, on peut ajouter la ou les portions de fractions fermentées avec au moins une souche bactérienne thermophile à raison de 1-40% par rapport au poids total du lait et la ou les portions de fractions fermentées avec au moins une souche bactérienne mésophile à raison de 1-40% par rapport au poids total du lait.

On peut notamment ajouter ces portions à du lait ayant un une teneur en matière grasse de 1,5-4%, de manière à régler la matière grasse finale du fromage de type mozzarella.

On peut traiter thermiquement jusqu'à 30-37° C le lait aromatisé, de manière à atteindre la température optimale d'activité de la présure, lors de la coagulation.

On peut alors coaguler le lait aromatisé, pendant 15-35 min, par ajout de 6-35 g de présure, selon la force de la présure, pour 100 kg de lait aromatisé, de manière à obtenir un coagulum.

On découpe ensuite le coagulum en morceaux que l'on brasse en cuve, de manière à obtenir un grain de caillé dont la matière sèche, de 35-45%, est optimale pour l'étape de filature-formage.

On sépare alors instantanément, en continu, le sérum du grain de caillé, de manière à obtenir une masse de fromage de type mozzarella. On peut effectuer cette séparation sur tambour filtrant.

On file et on forme alors cette masse de fromage de type mozzarella en unités. De préférence, on forme des unités de 5-400 g que l'on peut conditionner dans une solution d'eau salée, notamment, par addition de 0,1-1% de chlorure de sodium, dans un emballage hermétique en matière plastique rigide ou souple.

De préférence, on maintient la température à 26-32° C depuis l'étape de brassage jusqu'à l'étape de filature-formage.

La présente invention a également pour objet le fromage de type mozzarella obtenu par la mise en oeuvre du procédé. Ce fromage de type mozzarella présente une bonne texture typique et un goût fermier authentique comparables à ceux d'un fromage de type mozzarella réalisé traditionnellement.

Le procédé de préparation d'un fromage de type mozzarella selon l'invention est décrit plus en détails à l'aide des exemples ci-après. Les pourcentages sont donnés en poids, sauf indication contraire.

### Exemple 1

On prépare un fromage de type mozzarella selon le procédé de l'invention.

Pour ce faire, on fermente pendant 5h à 38° C à un pH de 4,4 une fraction de lait avec 0,4% de la souche *Streptococcus thermophilus* CNCM I-1383 et pendant 10h à 30° C à pH 4,3 une fraction de lait avec la souche *Lactococcus lactis* subsp *lactis* biovar *diacétylactis* CNCM I-1962.

On ajoute ensuite 38 ml de la fraction de lait fermentée par la souche CNCM I-1383 et 229 ml de la fraction fermentée par la souche CNCM I-1962 à 1 l de lait ayant une teneur de 2,9% de matière grasse, de manière à obtenir un lait aromatisé à un pH de 5,7.

On traite thermiquement le lait aromatisé ainsi obtenu, de manière à maintenir sa température à 32,5° C pour l'étape de coagulation.

On le coagule pendant 20 min par ajout de 0,1 g de présure animale au 1/10 000 ème, de manière à obtenir un coagulum que l'on découpe en morceau et que l'on brasse en cuve. On réalise ainsi un grain de caillé.

On sépare instantanément, en continu, le sérum du grain de caillé sur tambour filtrant, de manière à obtenir une masse de fromage de type mozzarella, que l'on file et que l'on forme en unités de 100 g.

Depuis l'étape de brassage jusqu'à l'étape de filature-formage, on maintient la température du milieu à 30° C.

On conditionne alors ces fromages de type mozzarella de 100 g dans des emballages hermétiques en plastique souple, dans lesquels il baignent dans une solution d'eau contenant 0,5% de chlorure de sodium, appelée latticello.

Ces fromages de type mozzarella ont un goût fermier authentique et la texture typique.

### Exemple 2

On prépare un fromage de type mozzarella selon le procédé de l'invention.

Pour ce faire, on fermente pendant 7h à 34° C à un pH de 4,6 une première fraction de lait avec 0,3% de la souche *Leuconostoc mesenteroïdes* subsp *mesenteroïdes* CNCM I-1957, avec 0,3% de la souche *Lactococcus lactis* subsp *lactis* biovar *diacétylactis* CNCM I-1961 et avec 0,3% de la souche *Enterococcus faecium* CNCM I-1959.

On fermente pendant 7h à 30° C à pH 4,6 une deuxième fraction de lait avec 0,4% de la souche *Lactococcus lactis* subsp *lactis* biovar *diacétylactis* CNCM I-1962.

On fermente pendant 5h à 38° C à pH 4,6 une troisième fraction de lait avec 0,4% de la souche *Streptococcus thermophilus* CNCM I-1421.

On ajoute ensuite 30 ml de la première fraction de lait fermentée par les souches CNCM I-1961, CNCM I-1957 et CNCM I-1959, 30 ml de la deuxième fraction de lait fermentée par la souche CNCM I-1962 et 10 ml de la troisième fraction de lait fermentée par la souche CNCM I-1421 à 1 l de lait ayant une teneur en matière grasse de 2,9%, de manière à obtenir un lait aromatisé à pH 5,7.

On traite thermiquement le lait aromatisé ainsi obtenu, de manière à maintenir sa température à 32,5° C pour l'étape de coagulation.

On le coagule pendant 20 min par ajout de 0,1 g de présure animale au 1/10 000 ème, de manière à obtenir un coagulum que l'on découpe en morceau et que l'on brasse en cuve. On réalise ainsi un grain de caillé.

On sépare instantanément, en continu, le sérum du grain de caillé sur tambour filtrant, de manière à obtenir une masse de fromage de type mozzarella, que l'on file et que l'on forme en unités de 5 g.

Depuis l'étape de brassage jusqu'à l'étape de filature-formage, on maintient la température du milieu à 30° C.

On conditionne alors ces fromages de type mozzarella de 5 g dans des emballages hermétiques en plastique souple, dans lesquels il baignent dans une solution d'eau contenant 0,5% de chlorure de sodium, appelée latticello.

Ces fromages de type mozzarella ont un goût fermier authentique et la texture typique.

## Revendications

1. Procédé de préparation d'un fromage type mozzarella, dans lequel:
- on fermente au moins une fraction de lait avec au moins une souche bactérienne thermophile et au moins une fraction de lait avec au moins une souche bactérienne mésophile,
- on ajoute une portion de chacune de ces fractions de laits fermentés à du lait en quantité suffisante, de manière à atteindre le pH de filature et à le maintenir jusqu'à l'étape de filature-formage,
- on coagule le lait aromatisé, ainsi réalisé, par ajout de présure, de manière à obtenir un coagulum,
- on découpe ce coagulum en morceaux que l'on brasse en cuve,
- on sépare instantanément, en continu, le sérum du grain de caillé ainsi réalisé, de manière à obtenir une masse de fromage de type mozzarella,
- on file et on forme ensuite cette masse de fromage de type mozzarella en unités.

2. Procédé selon la revendication 1, dans lequel on utilise comme souches bactériennes mésophiles, pour fermenter au moins une fraction de lait, la souche de *Leuconostoc mesenteroïdes* subsp *mesenteroïdes* CNCM I-1956, la souche de *Leuconostoc mesenteroïdes* subsp *mesenteroïdes* CNCM I-1957, la souche de *Leuconostoc lactis* CNCM I-1958, la souche d'*Enterococcus faecium* CNCM I-1959, la souche de *Lactococcus lactis* subsp *lactis* biovar *diacétylactis* CNCM I-1960, la souche de *Lactococcus lactis* subsp *lactis* biovar *diacétylactis* CNCM I-1961 et/ou la souche de *Lactococcus lactis* subsp *lactis* biovar *diacétylactis* CNCM I-1962.

3. Procédé selon les revendications 1 et 2, dans lequel on fermente pendant 3-24 h à 20-45° C et à un pH de 4,0-5,5 au moins une fraction de lait avec 0,1-10% d'au moins une souche bactérienne thermophile et au moins une-fraction de lait avec 0,1-10% d'au moins une souche bactérienne mésophile.

4. Procédé selon les revendications 1 à 3, dans lequel le pH de filature est de 5,2-5,7.

5. Procédé selon les revendications 1 à 4, dans lequel le lait a une teneur en matière grasse de 1,5-4%.

6. Procédé selon les revendications 1 à 5, dans lequel on traite thermiquement jusqu'à 30-37° C le lait aromatisé avant de le coaguler.

7. Procédé selon les revendications 1 à 6, dans lequel on coagule pendant 15-35 min le lait aromatisé.

8. Procédé selon les revendications 1 à 7, dans lequel on maintient la température à 26-32° C depuis l'étape de brassage jusqu'à l'étape de filature-formage.

## Patentansprüche

1. Verfahren zur Herstellung von Mozarella-Käse, bei dem man
- mindestens eine Milchfraktion mit mindestens einem thermophilen Bakterienstamm und mindestens eine Milchfraktion mit mindestens einem mesophilen Bakterienstamm fermentiert,
- einen Anteil von jeder dieser fermentierten Milchfraktionen zu Milch in solcher Menge zusetzt, dass der pH der Ausbildung der fasrigen Textur erreicht wird und bis zum Schritt der Ausbildung der fasrigen Textur und der Formung beibehalten wird,
- die auf diese Weise hergestellte aromatisierte Milch durch Zusatz von Lab zur Bildung eines Koagulats koaguliert wird,
- dieses Koagulat in Stücke schneidet, die man im Behälter rührt,
- die Molke von dem auf diese Weise gebildeten Bruchkorn kontinuierlich momentan abtrennt, so dass man Mozarella-Käsemasse erhält,
- die fasrige Textur dieser Mozarella-Käsemasse ausbildet und sie zu Einheiten formt.

2. Verfahren nach Anspruch 1, bei dem man als mesophile Bakterienstämme zum Fermentieren mindestens einer Milchfraktion den Stamm *Leuconostoc mesenteroides* subsp. *mesenteroides* CNCM I-1956, den Stamm *Leuconostoc mesenteroides* subsp. *mesenteroides* CNCM I-1957, den Stamm *Leuconostoc lactis* CNCM I-1958, den Stamm *Enterococcus faecium* CNCM I-1959, den Stamm *Lactococcus lactis* subap. *lactis biovar diacetylactis* CNCM I-1960, den Stamm *Lactococcus lactis* subsp. *lactis biovar diacetylactis* CNCM I-1961 und/oder den Stamm *Lactococcus lactis* subsp. *lactis biovar diacetylactis* CNCM I-1962 verwendet.

3. Verfahren nach den Ansprüchen 1 und 2, bei dem man 3-24 h bei 20-45°C und bei einem pH von 4,0-55 mindestens eine Milchfraktion mit 0,1-10% mindestens eines thermophilen Bakterienstamms und mindestens eine Milchfraktion mit 0,1-10% mindestens eines mesophilen Bakterienstamms fermentiert.

4. Verfahren nach den Ansprüche 1 bis 3, bei dem der pH der Ausbildung der fasrigen Textur 5,2-5,7 beträgt.

5. Verfahren nach den Ansprüchen 1 bis 4, bei dem die Milch einen Fettgehalt von 1,5-4% hat.

6. Verfahren nach den Ansprüchen 1 bis 5, bei dem man die aromatisierte Milch bis zu 30-37°C thermisch behandelt, bevor sie koaguliert wird.

7. Verfahren nach den Ansprüchen 1 bis 6, bei dem man die aromatieierte Milch 15-35 min koaguliert.

8. Verfahren nach den Ansprüchen 1 bis 7, bei dem man die Temperatur vom Rührschritt bis zum Schritt der Ausbildung der fasrigen Textur und der Formung auf 26-32°C hält.

## Claims

1. Method for preparing cheese of the mozzarella type, wherein:
- at least one milk fraction is fermented with at least one thermophilic bacterial strain and at least one milk fraction with at least one mesophilic bacterial strain,
- a portion of each of these fractions is added to the milk,
- the flavoured milk produced in this way is coagulated by adding rennin so as to obtain a coagulum,
- this coagulum is cut up into pieces that are mashed in a vat,
- the whey is immediately and continuously separated from the curd granules produced in this way, so as to obtain a mass of cheese of the mozzarella type,
- this mass of cheese of the mozzarella type is then spun and formed into units.

2. Method according to claim 1 wherein, in order to ferment at least one milk fraction, use is made as mesophilic bacterial strains, of the strain of *Leuconostoc mesenteroides* subsp *mesenteroides* CNCM I-1956,
the strain of *Leuconostoc mesenteroides* subsp *mesenteroides* CNCM I-1957, the strain of *Leuconostoc lactis* CNCM I-1958, the strain of *Enterococcus faecium* CNCM I-1959, the strain of *Lactococcus lactis* subsp *lactis* biovar *diacetylactis* CNCM I-1960, the strain of *Lactococcus lactis* subsp *lactis* biovar *diacetylactis* CNCM I-1961 and/or the strain of *Lactococcus lactis* subsp *lactis* biovar *diacetylactis* CNCM I-1962.

3. Method according to claims 1 and 2, wherein at least one milk fraction is fermented for 3-24 h at 20-45°C and at a pH of 4.0-5.5, with 0.1-10 % of at least one thermophilic bacterial strain and at least one milk fraction with 0.1-10 % of at least one mesophilic bacterial strain,

4. Method according to claims 1 to 3, wherein the pH for spinning is 5.2-5.7.

5. Method according to claims 1 to 4, wherein the milk has a fat content of 1.5-4 %.

6. Method according to claims 1 to 5, wherein the flavoured milk is heat treated at 30-37°C before it is coagulated.

7. Method according to claims 1 to 6, wherein the flavoured milk is coagulated for 15-35 min.

8. Method according to claims 1 to 7, wherein the temperature is maintained at 26-32°C from the mashing step up to the spinning-forming step.
